# FASCICULE DE BREVET EUROPEEN

(11) **EP 1 201 057 B1**
(45) Date de publication et mention de la délivrance du brevet: **05.01.2005**
(21) Numéro de dépôt: 00938956.0
(22) Date de dépôt: 23.06.2000
(51) Int. Cl.: H04L 9/32, H04N 7/167

(54) **METHODE ET DISPOSITIF POUR GARANTIR L'INTEGRITE ET L'AUTHENTICITE D'UN ENSEMBLE DE DONNEES**
VERFAHREN UND VORRICHTUNG ZUR GEWÄHRLEISTUNG DER INTEGRITÄT UND DER AUTHENTIZITÄT EINES DATENSATZES
METHOD AND DEVICE FOR GUARANTEEING THE INTEGRITY AND AUTHENTICITY OF A SET OF DATA

(30) Priorité: 04.08.1999 CH 143899
(43) Date de publication de la demande: 02.05.2002
(73) Titulaire: Nagravision SA, 1033 Cheseaux-sur-Lausanne (CH)
(72) Inventeur: HILL, Michael, John, CH-1296 Coppet (CH); NICOLAS, Christophe, CH-1028 Préverenges (CH); SASSELLI, Marco, CH-1803 Chardonne (CH)
(74) Mandataire: Wenger, Joel-Théophile
(86) Numéro de dépôt international: PCT/IB2000/000847
(87) Numéro de publication internationale: WO 2001/011820

(56) Documents cités:
- EP-A- 0 689 316
- EP-A- 0 723 371
- EP-A- 0 752 786
- WO-A-99/07150

## Description

La présente invention est relative au domaine du contrôle d'intégrité et d'authenticité de données, en particulier lors du téléchargement de logiciels.

L'invention s'applique à toute machine comprenant au moins une unité centrale telle que couramment connue et utilisée en informatique, au sens d'un processeur possédant au moins une partie de son programme dans une mémoire à écritures multiples.

Il est connu qu'une altération ou corruption de données laisse des traces dans certaines parties des informations traitées et stockées dans une mémoire, avant ou après traitement. Il est connu d'utiliser une technique mathématique simple telle que le calcul du "checksum" afin de déterminer si les données prises en considération ont été modifiées depuis l'établissement du checksum de référence.

Néanmoins, il se peut que le système de contrôle a été également altéré et qu'il n'est plus en mesure de vérifier le contenu de sa mémoire. Ainsi, il peut y avoir, au cours des opérations mathématiques, propagation d'erreurs aléatoires qui peuvent se compenser, donnent un résultat identique à celui attendu. En conséquence, la vérification par les méthodes connues sera inopérante dans certains cas.

Il y a donc un problème non résolu de façon satisfaisante à ce jour, qui consiste à améliorer la fiabilité et la sécurité procurée par les opérations de vérification connues, en particulier lorsque la même unité est en charge de calculer son checksum et de le comparer à une valeur de référence.

Il est connu, pour rendre visible toute modification des données, d'utiliser une opération unidirectionnelle sur les données c'est-à-dire, une opération qu'il est aisé de réaliser dans un sens mais quasiment impossible dans l'autre. Par exemple, l'opération x^{y} est facile à réaliser mais l'opération ^{y}√x est bien plus difficile.

On entend par opération sans collision une opération selon laquelle aucune combinaison différente des données en entrée ne donne un résultat similaire.

Dans le cadré de l'invention, cette opération unidirectionelle est une application mathématique H d'un ensemble source vers un ensemble objet, dans laquelle chaque élément x de l'ensemble source se voit attribuer une image H(x). Ces fonctions sont particulièrement utiles lorsque ce sont des fonctions dites Hash, telles que définies en page 27 de l'ouvrage RSA Laboratories' Frequently Asked Questions About Today's Cryptography, v4.0. L'élément x peut être d'une longueur quelconque mais H(x) est toujours une suite de caractères de longueur fixe ("fixed-size string"). Une telle fonction est difficile à inverser, c'est-à-dire que la connaissance de H(x) ne permet en général pas de retrouver x. Elle est de plus dite libre de collision lorsqu'elle est injective, c'est-à-dire que H(y)=H(x) entraîne nécessairement y=x, de même que H(y)≠H(x) entraîne nécessairement y≠x.

Le document EP-A-0689316 décrit un module de réception de données sans fil qui reçoit de l'émetteur une signature cryptographique des données reçues. Le contrôle de la signature est effectuée par le récepteur lui-même.

L'invention concerne une méthode pour contrôler l'intégrité et l'authenticité d'un ensemble de données reçues, selon la revendication 1, et d'un ensemble de données mémorisées, selon la revendication 17.

Le but de l'invention est de s'assurer que les informations contenues dans un décodeur de télévision à péage, sont d'une part, celles que le centre de gestion a transmises et subséquemment, d'autre part, qu'elles n'ont pas été altérées.

Ce but est atteint par une méthode pour contrôler l'intégrité et l'authenticité d'un ensemble de données mémorisées (M1 à Mn) dans une unité de décodage de télévision à péage qui est composée d'un décodeur et d'une unité de sécurité ainsi que de moyens de communications (NET, REC) avec un centre de gestion. Cette méthode consiste à :
- transmettre les données (M1 à Mn) à l'unité de sécurité,
- calculer une information de contrôle (Hx) représentative du résultat d'une fonction dite, unidirectionnelle et sans collision, effectuée sur tout ou partie des données (M1 à Mn),
- encrypter l'information de contrôle (Hx) par une première clé (k1)
- établir la conformité de l'information de contrôle (Hx) par une communication au centre de gestion par l'un des moyens de communications.

Ainsi, l'intégrité des données n'est plus uniquement contrôlée par l'unité de décodage dans laquelle sont contenus ces données mais est assurée par une entité externe, réputée inviolable, l'unité de sécurité.

Selon l'invention, le décodeur peut effectuer lui-même le calcul et transmettre le résultat à l'unité de sécurité ou transmettre les données M1 à Mn à l'unité de sécurité qui effectuera l'opération de calcul de l'information Hash.

Les clés utilisées pour encrypter la communication avec le centre de gestion sont des clés présentes uniquement dans le module de sécurité. Le décodeur n'a pas les moyens pour décrypter ces messages et donc modifier les données transmises par le centre de gestion quand bien même ces messages transitent physiquement par le décodeur.

Ces unités de sécurités sont généralement sous la forme de carte à puce (Smart Card) et comprennent une mémoire, un microprocesseur et des moyens de communications.

Par moyens de communications; on entend soit une liaison bidirectionnelle sur une connexion câblée, soit une sortie par modem, soit une liaison par voie hertzienne. Il est également inclus dans cette expression le media principal véhiculant les données et sur lequel des messages à destination du module sécurité sont acheminés.

L'opération de vérification de la conformité de l'information de contrôle (Hx) peut être exécuté de plusieurs manières.

Le module de sécurité envoie au centre de gestion l'information de contrôle sous forme cryptée, ce dernier étant en charge d'effectuer la vérification. Dans sa réponse, le centre de gestion peut soit envoyer un simple résultat de comparaison OK/NOK ou renvoyer la valeur de référence. Tous ces messages sont bien entendu encryptés par une clé propre au module de sécurité.

Le centre de gestion mémorise le résultat en référence à chaque unité d'abonné comme preuve soit du bon fonctionnement de l'opération de téléchargement, ou au contraire, de l'altération des données en vue d'une répétition par exemple.

Selon une variante de l'invention, le centre de gestion peut envoyer préalablement la valeur de référence à destination des modules de sécurité. Ainsi, il ne sera pas nécessaire d'appeler le centre de gestion pour la vérification de la conformité de l'information de contrôle calculée Hx.

Dans une autre forme d'exécution, et lors d'une demande de vérification émanant d'une unité de sécurité, le centre de gestion renvoie à titre de résultat de la comparaison, la valeur de référence (Hy) sous forme encryptée k2(Hy) au module de sécurité. De ce fait, le centre de gestion ne se contente pas d'informer l'unité de sécurité si la comparaison est correcte ou pas, mais renvoie la valeur de référence à l'unité de sécurité. Ceci se fera principalement si la comparaison a donné un résultat positif afin que l'unité de sécurité puisse mémoriser la valeur de référence Hy.

Ce renvoi peut être effectué par l'intermédiaire des voies de communications auxiliaires telles que modem, ou par la voie principale des données.

Dans le cas où les données M1 à Mn sont déjà accompagnées par des moyens de vérifications, tels que CRC, Checksum CS ou Hash, l'unité de décodage peut effectuer un premier test grâce à ce moyen connu en soi. Néanmoins, la fiabilité de ce test est à mettre en doute dans le sens que, si les données ont été modifiées par une tierce personne, il est certain que cette personne aura également modifié les moyens de vérifications. C'est pourquoi, selon la méthode de l'invention, l'unité de sécurité peut informer l'unité de décodage de ne pas accepter le résultat du test comme garant de l'authenticité des données mais que cette authenticité soit déterminée selon la méthode décrite plus haut.

Cette variante est importante dans le cas de la mise à jour d'un parc de décodeurs, certains, de l'ancienne génération fonctionnant et donc nécessitant la vérification par Checksum alors que d'autres, ont déjà été équipés par le système selon la méthode revendiquée.

Lorsque l'on télécharge une mise à jour du logiciel, il est d'usage de n'envoyer que la partie ayant subi des modifications. Les données M1 à Mn ne représentant pas l'entier du programme nouvellement mis à jour. C'est pourquoi, afin de conserver un moyen de test fiable sur l'ensemble du programme, il est important de disposer d'une valeur de référence H'y représentative d'une fonction Hash sur le programme nouvellement formé.

Il existe une première méthode qui consiste à établir l'intégrité du programme P0 initial c'est-à-dire avant la mise à jour. Pour cela on dispose du résultat initial H0 de la fonction Hash sur le programme P0 soit initialisé lors de l'installation du programme P0, soit issu de la méthode selon l'invention.

Lorsque l'authenticité des données de la mise à jour a été établie et ces dernières introduites dans la mémoire programme, le module de sécurité peut immédiatement ordonner l'exécution de la fonction Hash sur l'entier du nouveau programme P1 donnant le résultat H1. Ce résultat servira pour les contrôles subséquents ou lors de prochaines mises à jour.

Une variante de cette méthode consiste à obtenir du centre de gestion la nouvelle valeur H'y représentative du résultat de la fonction Hash sur l'entier du nouveau programme P1, ici représenté par M0 à Mm.

Les données de gestion R renvoyée par le centre de gestion peuvent comprendre un descripteur de données D qui indique à l'unité de décodage (IRD) la manière d'utiliser ces données. Ce descripteur peut prendre la forme d'une table contenant les adresses de destinations de données. Ainsi, il n'est pas possible d'utiliser ces données sans ce descripteur, ce dernier étant retourné à l'unité de décodage (IRD) uniquement si la comparaison est positive.

Selon une variante de l'invention, le centre de gestion inclus dans les données de gestion R un certificat permettant d'authentifier l'émetteur des données.

Cette fonction de vérification n'est pas uniquement liée au téléchargement de nouvelles données dans un décodeur mais permet de tester en tout temps la validité et l'authenticité des données. Dans ce cas, l'opération consiste à calculer périodiquement ou sur requête les valeurs (Hx) représentatives du résultat d'une fonction dite unidirectionnelle et sans collision effectuée sur tout ou partie des données (M0 à Mm) en mémoire opérationnelle du décodeur et de transmettre cette information (H'x) à l'unité de sécurité pour comparaison avec une valeur de référence (H'y).

Pour effectuer cette opération, il existe une première méthode qui consiste à ce que le calcul soit effectué par le décodeur, Le résultat étant transmis à l'unité de sécurité. Selon une variante de cette méthode, le calcul est effectué par l'unité de sécurité, les données (M0 à Mm) étant transmises du décodeur à l'unité de sécurité (SC).

La requête pour ces opérations de vérifications peut provenir du centre de gestion, de l'unité de sécurité, d'une unité de test ou par l'un des moyens de communications, voire à chaque mise sous tension.

Lorsque l'unité de sécurité compare la valeur calculée H'x à la référence H'y, cette dernière pouvant être représentée soit par la valeur calculée par le décodeur IRD après confirmation de sa validité par le centre de gestion, soit la valeur de référence fournie par le centre de gestion.

Une des manières que certaines personnes mal intentionnées utilisent pour tenter de comprendre le fonctionnement d'un système de télévision à péage, est l'observation des réactions suite à une tentative de modification. C'est pourquoi, l'invention s'étend également sur une méthode de transmission du résultat de la comparaison qui se fait d'une manière différée, par exemple lorsque l'abonné décide d'acheter une émission et qu'un message d'abonnement est envoyé au centre de gestion.

Il est aisé d'inclure dans ce message l'information que les données M1 à Mn ont été altérées. Il sera ainsi difficile de faire le lien entre la modification des données et le blocage du décodeur qui peut intervenir beaucoup plus tard.

Selon une variante, la valeur du résultat du calcul Hx est transmis au centre de gestion. Pour ce faire, et rester discret, le résultat est fractionné et inclus, morceau par morceau dans des messages d'administrations usuels au système.

Le centre de gestion va reconstituer la valeur Hx morceau par morceau et lorsque la valeur est complète, déterminer s'il y a eu des modifications des données.

Un des problèmes rencontré lors de mises à jour d'un grand nombre de décodeurs, est le nombre d'appels au centre de gestion pour obtenir la vérification.

Une solution proposée dans le cadre de cette invention est de répartir d'une manière pseudo-aléatoire les appels au centre de gestion.

Une autre solution précédemment décrite consiste à envoyer la valeur de référence au préalable. Ainsi, si les données sont bien reçues, ce qui constitue la majorité des cas, la mise à jour peut intervenir sans attendre un appel au centre de gestion. Cet appel sera néanmoins effectué pour confirmer que la mise à jour s'est correctement effectuée.

Dans une forme particulière de réalisation, l'ensemble considéré comprend une partie émission, située dans un centre de gestion, et une partie réception qui peut être constituée par un nombre relativement grand d'unités périphériques fonctionnellement semblables. Le but est de garantir que le logiciel envoyé par la partie émission est reçu de manière authentique et intégrale par chacune des unités périphériques. Par analogie avec le vocabulaire de la télévision à péage, qui constitue une application importante mais non exclusive de l'invention, ces unités périphériques seront dans la suite de l'exposé appelées IRD soit Integrated Receiver Decoder comprenant une partie récepteur, un décodeur pour le traitement du signal reçu par le décodeur, un processeur central ou CPU qui travaille de préférence avec une mémoire non volatile ainsi que divers périphériques.

Une mémoire non volatile est une mémoire dont le contenu est maintenu même lors de la coupure de l'alimentation principale, par exemple au moyen d'une source d'énergie autonome telle que batterie ou pile. D'autres types de mémoires non volatiles peuvent être utilisées, telles que des mémoires dites EEPROM, Flash EPROM ou encore FEPROM. C'est cette mémoire non volatile qui contient les données sauvegardées en cas d'interruption de l'alimentation électrique. Elle est essentielle pour le bon fonctionnement du processeur de l'IRD.

Les informations sont reçues par l'IRD en provenance du centre de gestion, sous forme d'un flux de données arrivant au récepteur de l'unité IRD. Dans le cas de la télévision codée, ou plus généralement interactive, le flux de données comprend des informations vidéo, des informations audio, des informations de données, des applications exécutables telles que des "applets", et enfin des informations de contrôle de données de divers types.

Il s'agit dans ce cas de s'assurer que ces informations sont correctement reçues et interprétées par l'IRD avant leur stockage en mémoire opérationnelle, en particulier les données qui seront exécutées c'est-à-dire le logiciel.

Le récepteur de l'IRD les transmet à un décodeur, qui lui-même les met en circulation dans l'IRD au moyen d'un bus. Sur ce bus sont connectés un processeur spécialisé dans le multimédia, lui-même connecté à un écran de visualisation ainsi qu'à un ou plusieurs haut-parleurs, la mémoire non volatile précitée, et un ou plusieurs sous-ensembles optionnels. C'est le processeur de l'IRD (CPU) qui administre et contrôle le fonctionnement de celui-ci, ainsi que les différents sous-ensembles tels qu'un canal de test, une interface pour carte à puce, une mémoire auxiliaire dite de masse, d'autres processeurs, ou encore un modem. De plus, le centre de gestion peut recevoir des informations en retour, par exemple par le biais du modem connecté au réseau public de télécommunications.

Ces sous-ensembles peuvent eux-mêmes être la source d'erreurs qu'il s'agit de détecter et de corriger, notamment dans le cas du chargement d'une nouvelle version du logiciel de fonctionnement de l'IRD et particulièrement de son CPU, ou de certains programmes exécutables par l'IRD ou ses composants.

Le logiciel et les données dont l'authenticité et l'intégrité doivent être garanties peuvent être chargés par divers moyens. L'un de ces moyens consiste, comme il a été dit, à utiliser le récepteur précité, en envoyant vers ce récepteur avec le flux de données, et en l'identifiant de manière reconnaissable par l'unité centrale, une mise à jour de mémoire comprenant plusieurs blocs de données M1, M2, ...Mn ainsi qu'une en-tête permettant d'identifier les données M1 à Mn.

Alternativement ou en complément, les blocs de données peuvent parvenir à l'IRD par l'un de ses sous-ensembles optionnels telle modem par exemple.

Les blocs de données M1, M2, ...Mn peuvent sans inconvénient être envoyés en clair, c'est-à-dire sans encryptage à ce stade, dans le cadre de l'invention.

La méthode selon l'invention consiste, dans cette forme, à appliquer d'abord, au stade de l'émission, une fonction unidirectionnelle ou fonction "hash" à tout ou partie des blocs de données M1, M2, ...Mn pour obtenir un résultat Hx représentatif de l'ensemble M1 à Mn. On peut également traiter les blocs de données M1 à Mn séparément et obtenir le résultat Hx1 correspondant à M1, Hx2 correspondant à M2 ... et Hxn correspondant à Mn. Ce ou ces résultats Hx sont mémorisés par le centre de gestion pour vérification ultérieure.

Un domaine particulièrement crucial pour l'authentification des données concerne les systèmes pour lesquels les données sont transmises par des voies publiques tels que voie hertzienne, téléphonique ou Internet. Dans ce cas, un intrus peut se substituer à un centre de gestion et envoyer des données pour modifier le fonctionnement du système cible.

Il est connu d'adjoindre un cryptogramme lors de la transmission des données pour authentifier ces dernières. Néanmoins ce cryptogramme répond uniquement au besoin d'identifier l'auteur des données mais est sans effet sur un décodeur qui aurait perdu le critère de référence.

La force de la méthode réside d'une part dans la qualité de la fonction unidirectionnelle H et dans la certification de cette signature par une unité de sécurité réputée inviolable. Ainsi, un simple checksum ne permet pas de détecter l'échange de deux blocs de caractères dans les données puisque l'addition est réputée, en mathématiques, commutative et associative. Par contre, un résultat de fonction "hash" Hx est une image très réaliste de x, même si x est beaucoup plus long que Hx. Si des échanges de caractères sont effectués dans la suite de caractères x, la fonction H(x) le détectera immédiatement, et le système ne pourra pas fonctionner suite à cette détection. Il en résulte une sécurité accrue.

Un aspect important de l'invention est de permettre de vérifier à tous moments la validité des données en mémoire dans l'unité périphérique: En effet, la présence dans le module de sécurité de ces informations de contrôle permet au décodeur de procéder à une auto-vérification fiable. Cette vérification donne un résultat sans comparaison avec le checksum habituellement appliqué sur la mémoire programme. Si cette vérification donne un résultat que la référence, l'unité dispose de moyens (liaison modem, liaison sur canal câblé) pour informer une entité extérieure, par exemple le centre de gestion, de la non conformité du programme.

Si le moyen préférentiel de l'invention pour la génération et la transmission des informations de contrôle est le centre de gestion, l'invention recouvre une unité périphérique dont tout ou partie du programme est initialement chargé avec les informations de contrôle telles que décrites ci-dessus. Ceci peut être effectué dans un site de fabrication ou lors de l'initialisation précédant la vente au moyen du processeur, ou par téléchargement de ces informations de contrôle par l'un des périphériques lors d'une étape d'initialisation.

La présente invention est illustrée par le schéma bloc d'un IRD.

Sur cette figure, un IRD ou Integrated Receiver Decoder est représenté, constituant la partie périphérique de l'ensemble auquel est appliqué la méthode selon l'invention dans le mode de réalisation décrit ci-après. Cette IRD comprend un bus central DB sur lequel viennent se connecter tous les différents modules. Le module central de l'IRD est constitué par le processeur CPU qui a pour tâche d'effectuer les différents traitements.

Un récepteur REC reçoit un flux de données comprenant des informations vidéo, audio, des données et des applications exécutables via des supports aussi variés qu'un câble, une antenne hertzienne, une parabole sâtellite, Internet ou d'autres technologies connues. Ce récepteur REC est relié à une interface DC, elle-même connectée au bus DB.

Sur ce bus DB sont aussi connectés:
- un processeur multimédia MP spécialisé dans le traitement des informations vidéo ou audio, qu'il dirige respectivement vers un écran de visualisation VD et des haut-parleurs AD;
- un canal de test TC, lui-même pouvant être relié à un testeur TEST servant aux réglages d'usine et à la maintenance;
- une mémoire non volatile NVM, rendue indépendante de l'alimentation principale par sa propre source d'alimentation;
- une interface INT pour carte à puce, recevant physiquement une carte à puce SC;
- une mémoire auxiliaire ou encore mémoire de masse TMEM;
- un modem MD, connecté au réseau public NET, celui-ci adoptant des technologies et supports connus;
- d'autres processeurs OP, DP assumant diverses fonctions au gré de l'utilisateur, notamment celles du traitement de données Data.

C'est le CPU qui contrôle les mises à jour de logiciel dont un exemple va être décrit. Il les accepte ou les rejette en fonction du résultat des tests réalisés selon la méthode qui fait l'objet de l'invention.

Ces versions de logiciel du CPU de l'IRD peuvent parvenir à l'IRD par le récepteur REC, par le testeur TEST, par la carte à puce SC, ou encore par le réseau NET. Dans la suite, on décrira plus avant le cas où elles arrivent à l'IRD par le récepteur REC avec le flux d'informations vidéo et audio.

Un ensemble de données, représentant une nouvelle version de logiciel arrivant à l'IRD, est stocké en mémoire temporaire TMEM de l'IRD, avec les informations de service, après avoir été contrôlé quant à son authenticité et son intégrité. Ceci permet au centre de gestion de charger cette version de logiciel dans un grand nombre d'IRD périphériques, et de déclencher sa mise en service sans erreur par l'ensemble de ces IRD.

Une fois que le message contenant les données est reçu par l'IRD, ces données sont décomposée et les différents éléments stockés dans la mémoire temporaire TMEM: L'IRD applique aux blocs de données M1 à Mn le même traitement que lors de l'émission, mais dans l'ordre inverse. Il est clair que dans le cas où l'on reçoit le bloc de données sous forme chiffrée, la première opération consiste à décrypter ces données par la clé publique PuK pour obtenir les données en clair.

L'étape suivante consiste à effectuer la fonction unidirectionnelle H sur les blocs de données M1 à Mn avec pour résultats les valeurs Hy1 à Hyn. Dans le cas où une erreur s'est glissée dans les blocs mémoire M1, M2, ...Mn pendant la transmission du message, cette erreur se répercute sur Hy qui se trouve alors être différent de Hx contenu dans le bloc de contrôle et les données M1 à Mn seront rejetées.

Ces résultats sont transmis à la carte à puce SC qui est en charge de leur authentification. Comme décrit plus haut, cette opération est effectuée grâce à une connexion au centre de gestion, soit immédiatement soit d'une manière différée.

Comme exemple de fonctions H, on connaît les fonctions MD2, MD5 et SHA-1.

Selon une autre variante de l'invention, l'unité contenant les données ne dispose pas de voie de communication avec un centre de gestion. Les données sont livrées à une unité de stockage avec des informations de contrôle (R1) incluant le résultat d'une fonction dite unidirectionnelle et sans collision, dite fonction Hash, effectuée sur tout ou partie des données (M1 à Mn). La particularité de ces données de contrôle (R1) est d'une part qu'elles contiennent le résultat de la fonction Hash pour l'ensemble des données considérées et d'autre part qu'elles sont stockées sous forme encryptée k2(Hy). L'unité de stockage ne peut ni les comprendre, ni les modifier.

Lors de la phase de vérification, l'unité de stockage transmet à l'unité de sécurité ces informations de contrôle sous forme encryptée. L'unité de sécurité dispose des moyens nécessaires pour décrypter ces informations, en particulier pour en extraire le résultat de la fonction Hash (Hy).

De plus, selon une première variante, l'unité de stockage effectue la fonction Hash sur les données M1 à Mn, calcule l'information de contrôle Hx et la transmet à l'unité de sécurité pour comparaison. En retour, l'unité de sécurité envoie des données de retour (R2) à l'unité de stockage incluant le résultat de la comparaison.

A charge ensuite à l'unité de stockage de prendre les mesures nécessaires dans le cas où les données ne sont authentifiées.

Selon une seconde variante, le calcul de l'information de contrôle Hx est effectué par l'unité de sécurité, cette dernière recevant les données M1 à Mn de la part du l'unité de stockage.

Dans une variante donnant une plus grande garantie quant à l'utilisation des données, il est ajouté aux données de contrôle (R1), une clé k3 servant à décrypter les données M1 à Mn. Ces données sont initialement stockées sous forme encryptée et la fonction Hash se fait sur les données encryptées. Lorsque la vérification de l'intégrité des données est faite par l'unité de sécurité et que le résultat est positif, l'unité de sécurité retourne, dans les données de retour (R2), à l'unité de stockage la clé k3 lui permettant de décrypter les données M1 à Mn.

Selon une variante de la méthode ci-dessus, l'unité de sécurité ne retourne pas la clé k3 mais c'est l'unité de stockage qui envoie les données M1 à Mn encryptées à l'unité de sécurité SC pour décryptage.

De la même manière que précédemment, ce contrôle peut être effectué à tout moment durant le fonctionnement de l'unité de stockage.

Les données de contrôle (R1) comprennent un descripteur de données D qui indique à l'unité de stockage la manière d'utiliser ces données. Ce descripteur peut prendre la forme d'une table contenant les adresses de destinations de données. Ainsi, il n'est pas possible d'utiliser ces données sans ce descripteur, ce dernier étant retourné à l'unité de stockage uniquement si la comparaison est positive.

Il est également prévu d'adjoindre au données de contrôle (R1) un certificat authentifiant l'émetteur de données, et ceci afin de conserver une trace dans l'unité de sécurité.

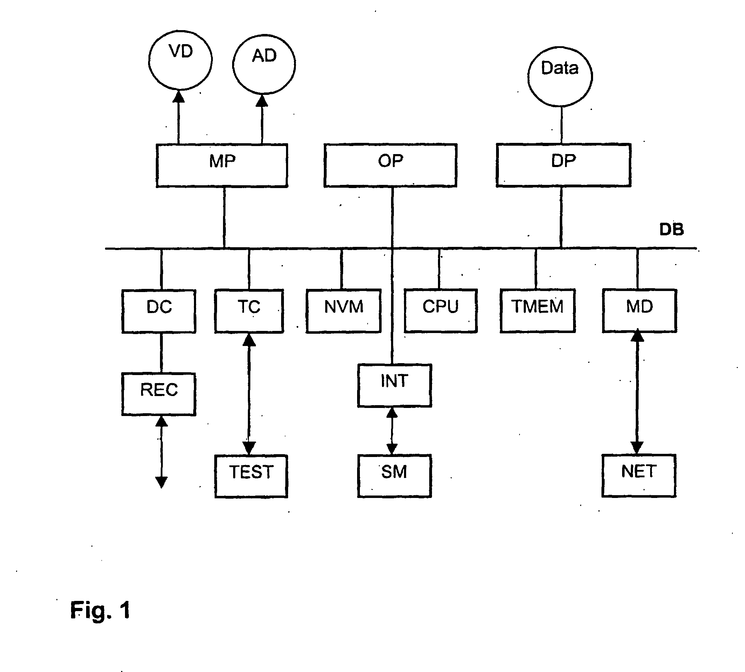

## Revendications

1. Méthode pour contrôler l'intégrité et l'authenticité d'un ensemble de données reçues (M1 à Mn) dans une unité de décodage de télévision à péage composée d'un décodeur (IRD) et d'une unité de sécurité (SC). ainsi que de moyens de communications (NET, REC) avec un centre de gestion, comprenant les étapes suivantes:
- calculer une information de contrôle (Hx) représentative du résultat d'une fonction dite unidirectionnelle et sans collision, effectuée sur tout ou partie des données (M1 à Mn),
**caractérisée en ce qu'**elle consiste à:
- transmettre l'information de contrôle (Hx) à l'unité de sécurité et encrypter cette information de contrôle (Hx) par une première clé (k1),
- envoyer au centre de gestion l'information de contrôle k1 (Hx) encrypté,
- décrypter par le centre de gestion l'information encryptée de contrôle k1 (Hx) et comparer avec une valeur de référence de l'information de contrôle (Hy),
- transmettre des données de gestion (R) incluant le résultat de la comparaison sous forme encryptée à destination de l'unité de sécurité (SC),
- décrypter par l'unité de sécurité (SC), le résultat encrypté de la comparaison et informer l'unité de décodage (IRD) de la validité des données (M1 à Mn).

2. Méthode selon la revendication 1, **caractérisée en ce que** le centre de gestion renvoie dans les données de gestion (R) la valeur de référence sous forme encryptée k2(Hy) au module de sécurité (SC).

3. Méthode selon les revendications 1 et 2, **caractérisée en ce que** le calcul est effectué par le décodeur (IRD), le résultat étant transmis à l'unité de sécurité (SC).

4. Méthode selon les revendications 1 à 3, **caractérisée en ce que** le calcul est effectué par l'unité de sécurité (SC), les données (M1 à Mn) étant transmises du décodeur (IRD) à l'unité de sécurité (SC).

5. Méthode selon les revendications 1 à 4, **caractérisée en ce qu'**elle consiste à inclure dans les données de gestion (R) un descripteur d'utilisation (D) des données (M1 à Mn), à décrypter les données de gestion (R) et à transmettre le descripteur (D) au décodeur si le résultat de la comparaison est positif, à traiter par le décodeur (IRD) les données (M1 à Mn) selon les directives contenues dans le descripteur (D).

6. Méthode selon les revendications 1 à 5, **caractérisée en ce que** les données (M1 à Mn) sont accompagnées par une information de validité (CRC, CS, H) desdites données et **en ce que** le module de sécurité (SC) transmet au décodeur l'information d'utiliser ou non cette information de validité pour contrôler les données (M1 à Mn).

7. Méthode selon la revendication 6, **caractérisée en ce que** cette information de validité est de type CRC (cyclic redundancy code), CS (checksum) ou Hash (fonction dite unidirectionnelle et sans collision).

8. Méthode selon les revendications 1 à 7, **caractérisée en ce qu'**elle consiste à inclure dans les données de gestion (R) une information de contrôle global (H'y) représentative du résultat d'une fonction dite unidirectionnelle et sans collision, effectuée sur tout ou partie des données globales (M0 à Mm), ces données étant égales ou englobant les données reçues (M1 à Mn).

9. Méthode selon la revendication 8, **caractérisée en ce que** les données de gestion (R) comprennent un certificat authentifiant l'émetteur des données (M1 à Mn).

10. Méthode selon la revendication 8, **caractérisée en ce qu'**elle consiste à calculer périodiquement ou sur requête les valeurs (H'x) représentatives du résultat d'une fonction dite unidirectionnelle et sans collision effectuée sur tout ou partie des données globales (M0 à Mm), l'unité de sécurité (SC) comparant ce résultat (H'x) avec la valeur de référence (H'y).

11. Méthode selon la revendication 10, **caractérisée en ce que** le calcul est effectué par le décodeur (IRD), le résultat du calcul (H'x) étant transmis à l'unité de sécurité (SC).

12. Méthode selon la revendication 10, **caractérisée en ce que** le calcul est effectué par l'unité de sécurité (SC), les données (M0 à Mm) étant transmises du décodeur (IRD) à l'unité de sécurité (SC).

13. Méthode selon les revendications 10 à 12, **caractérisée en ce que** le calcul périodique est effectué sur requête du centre de gestion, de l'unité de sécurité, d'une unité de test (TEST) ou par l'un des moyens de communications (NET, REC).

14. Méthode selon les revendications 10 à 13, **caractérisée en ce que** le résultat de la comparaison est transmis dans un message d'abonnement usuel au fonctionnement du système.

15. Méthode selon les revendications 10 à 13, **caractérisée en ce que** la valeur calculée (H'x) est transmise au centre de gestion à l'intérieur de messages d'abonnement usuels au fonctionnement du système, chaque message ne contenant qu'une partie de la valeur calculée (H'x).

16. Méthode selon l'une des revendications précédentes, **caractérisée en ce que** la transmission au centre de gestion se fait d'une manière différée, selon un horaire défini d'une manière pseudo-aléatoire à l'intérieur de limites prédéfinies.

17. Méthode pour contrôler l'intégrité et l'authenticité d'un ensemble de données mémorisées (M1 à Mn) dans une unité de stockage de données connectée à une unité de sécurité (SC) comprenant les étapes suivantes:
- transmettre de l'unité de stockage à l'unité de sécurité (SC) des données de contrôle (R1) comprenant une information de référence encryptée k1 (Hy) représentative du résultat d'une fonction dite unidirectionnelle et sans collision, préalablement effectuée sur tout ou partie des données (M1 à Mn),
- calculer une information de contrôle (Hx) représentative du résultat d'une fonction dite unidirectionnelle et sans collision, effectuée sur tout ou partie des données (M1 à Mn),
- comparer la valeur calculée (Hx) avec la valeur de référence décryptée (Hy) par l'unité de sécurité (SC) et transfert des données de gestion (R2) incluant le résultat de la comparaison à l'unité de stockage.

18. Méthode selon la revendication 17, **caractérisée en ce que** le calcul est effectué par l'unité de stockage, le résultat du calcul (Hx) étant transmis à l'unité de sécurité (SC).

19. Méthode selon la revendication 17, **caractérisée en ce que** le calcul est effectué par l'unité de sécurité (SC), les données (M1 à Mn) étant transmises de l'unité de stockage à l'unité de sécurité (SC).

20. Méthode selon les revendications 17 à 19, **caractérisée en ce qu'**elle consiste à inclure dans les données de contrôle (R1) un descripteur d'utilisation (D) des données (M1 à Mn), et si le résultat de la comparaison est positif, à retourner à l'unité de stockage le descripteur (D) sous forme décryptée, à traiter par l'unité de stockage les données (M1 à Mn) selon les directives contenues dans le descripteur (D).

21. Méthode selon la revendication 20, **caractérisée en ce que** les données de contrôle (R1) comprennent un certificat authentifiant l'émetteur des données (M1 à Mn).

22. Méthode selon l'une des revendications 17 à 21, **caractérisée en ce qu'**elle consiste à calculer périodiquement ou sur requête les valeurs (Hx) représentatives du résultat d'une fonction dite unidirectionnelle et sans collision effectuée sur tout ou partie des données (M1 à Mn), l'unité de sécurité (SC) comparant ce résultat (Hx) avec une valeur de référence (Hy).

23. Méthode selon l'une des revendications 17 à 22, **caractérisée en ce qu'**elle consiste à :
- stocker les données (M1 à Mn) sous forme encryptées
- transmettre à l'unité de sécurité (SC) dans les données de contrôle (R1) une clé (k3) de décryptage des données (M1 à Mn)
- si le résultat de la comparaison Hx=Hy est positif , à décrypter les données (M1 à Mn) par l'intermédiaire de la clé (k3).

24. Méthode selon la revendication 23, **caractérisée en ce que** l'opération de décryptage des données (M1 à Mn) est effectuée par l'unité de stockage, la clé de décryptage (k3) étant transmise par l'unité de sécurité (SC).

25. Méthode selon la revendication 23, **caractérisée en ce que** l'opération de décryptage des données (M1 à Mn) est effectuée par l'unité de sécurité (SC), les données (M1 à Mn) étant transmises de l'unité de stockage à l'unité de sécurité (SC).

26. Méthode selon les revendications 17 à 25, **caractérisée en ce qu'**elle consiste à inclure dans les données de contrôle (R1) un descripteur d'utilisation (D) des données (M1 à Mn); à décrypter les données de gestion (R1) et à transmettre le descripteur (D) à l'unité de stockage si le résultat de la comparaison est positif, à traiter par l'unité de stockage les données (M1 à Mn) selon les directives contenues dans le descripteur (D).

## Claims

1. A method to check the integrity and the authenticity of a set of data received (M1 to Mn) by a pay-T.V. decoding unit, consisting of a decoder (IRD) and a security unit (SC), and also by a means of communication (NET, REC) with a control center, including the following steps;
- calculation of a check information (HX) which is representative of the result of a mono-directional and collision-free function, carried out on all or only a part of the data (M1 to Mn);
**characterized in that**, this method consisting of :
- transmitting the check information (Hx) to the security unit (SC) and ciphering the check information (Hx) with a first cipher-key (k1);
- sending the ciphered control information k1 (Hx) to the control center;
- deciphering of the ciphered check information k1 (Hx) by the control center and comparing it with a reference value of the check information (Hy);
- transmitting the control data (R) including the result of the comparison in a ciphered form to the security unit (SC);
- deciphering of the ciphered result of the comparison by the security unit (SC) and informing the decoder (IRD) of the validity of the data (M1 to Mn).

2. A method according to claim 1, **characterized by** the fact that the control center sends the reference value in a ciphered form k2(Hy) with the control data (R) to the security module (SC).

3. A method according to claims 1 and 2, **characterized by** the fact that the calculation is carried out by the decoder (IRD), with the result being transmitted to the security unit (SC).

4. A method according to claims 1 to 3, **characterized by** the fact that the calculation is carried out by the security unit (SC), and the data (M1 to Mn) is transmitted from the decoder (IRD) to the security unit (SC).

5. A method according to claims 1 to 4, **characterized by** the fact that it consists of including a utilization describer (D) for the data (M1 to Mn) in the control data (R), deciphering the control data (R) and transmitting the describer (D) to the decoder (IRD) if the result of the comparison is positive, processing the data (M1 to Mn) by the decoder (IRD) according to the guidelines contained in the describer (D).

6. A method according to claims 1 to 5, **characterized by** the fact that the data (M1 to Mn) is accompanied by validity information (CRC, CS, H) for the said data, and in which the security module (SC) transmits to the decoder the information to use or not this validity information to check the data (M1 to Mn).

7. A method according to claim 6, **characterized by** the fact that this validity information is of the type CRC (cyclic redundancy code), CS (checksum) or Hash (a so-called mono-directional and collision-free function).

8. A method according to claims 1 to 7, **characterized by** the fact that it includes a global check information (H'y) in the control data (R) which is representative of a result of a mono-directional and collision-free function, carried out on all or only a part of the global data (M0 to Mm); this data is the same as, or includes, the data received (M1 to Mn).

9. A method according to claim 8, **characterized by** the fact that the control data (R) includes a warranty that certifies the broadcaster of the data (M1 to Mn).

10. A method according to claim 8, **characterized by** the fact that it consists of calculating periodically, or when requested, the value (H'x) representative of the result of a so-called mono-directional and collision-free function, carried out on all or only a part of the global data (M0 to Mm), with the security unit (SC) comparing the result (H'x) with the reference value (H'y).

11. A method according to claim 10, **characterized by** the fact that the calculation is carried out by the decoder (IRD), with the result of the calculation (H'x) being transmitted to the security unit (SC).

12. A method according to claim 10, **characterized by** the fact that the calculation is carried out by the security unit (SC), with the data (M0 to Mm) being transmitted from the decoder (IRD) to the security unit (SC).

13. A method according to claims 10 to 12, **characterized by** the fact that the periodic calculation is carried out on request from the control center, from the security unit, from a test unit (TEST) or from one of the means of communication (NET, REC).

14. A method according to claims 10 to 13, **characterized by** the fact that the result of the comparison is transmitted in a subscriber generated message common to the functioning of the system.

15. A method according to claims 10 to 13, **characterized by** the fact that the value calculated (H'x) is transmitted to the control center inside subscriber generated messages common to the functioning of the system, with each message containing a part of the value calculated (H'x).

16. A method according to one of the preceding claims, **characterized by** the fact that the transmission to the control center is carried out in deferred mode, according to a timetable defined in a pseudo-random manner within predefined limits.

17. A method to check the integrity and the authenticity of a set of data (M1 to Mn) memorized inside a data storage unit connected with a security unit (SC) including the following steps:
- transmission from the storage unit to the security unit (SC) of the control data (R1) including ciphered reference check information k1(Hy) representative of the result of a mono-directional and collision-free function, carried out on all or only a part of the data (M1 to Mn);
- calculation of check information (HX) which is representative of the result of a mono-directional and collision-free function, carried out on all or only a part of the data (M1 to Mn);
- comparison of the calculated value (Hx) with the deciphered reference value (Hy) by the security unit (SC) and transfer of the management data (R2) including the result of the comparison to the storage unit.

18. A method according to claim 17, **characterized by** the fact that the calculation is carried out by the storage unit, with the result of the calculation (Hx) being transmitted to the security unit (SC).

19. A method according to claim 17, **characterized by** the fact that the calculation is carried out by the security unit (SC), with the data (M1 to Mn) being transmitted from the storage unit to the security unit (SC).

20. A method according to claims 17 to 19, **characterized by** the fact that it includes, inside the control data (R1), a utilization describer (D) for the data (M1 to Mn), and if the result of the comparison is positive, sends the utilization describer (D) back to the storage unit in a deciphered form, to process the data (M1 to Mn) by the storage unit according to the guidelines contained in the describer (D).

21. A method according to claim 20, **characterized by** the fact that the control data (R1) includes a warrant that certifies the broadcaster of the data (M1 to Mn).

22. A method according to claims 17 to 21, **characterized by** the fact that it consists of calculating periodically, or when requested, the values (Hx) representative of the result of a so-called mono-directional and collision-free function, carried out on all or only a part of the data (M1 to Mm), with the security unit (SC) comparing the result (Hx) with the reference value (Hy).

23. A method according to claims 17 to 22, **characterized by** the fact that it consists of:
- storage of the data (M1 to Mn) in a ciphered form;
- transmission to the security unit (SC) in the control data (R1) of a deciphering key (k3) for the data (M1 to Mn).
- If the result of the comparison Hx=Hy is positive, deciphering of the data (M1 to Mn) with the use of the cipher-key (k3).

24. A method according to claim 23, **characterized by** the fact that the deciphering operation of the data (M1 to Mn) is carried out by the storage unit, the deciphering key (k3) being transmitted by the security unit (SC).

25. A method according to claim 23 **characterized by** the fact that the deciphering operation of the data (M1 to Mn) is carried out by the security unit (SC), the data (M1 to Mn) being transmitted from the storage unit to the security unit (SC).

26. A method according to claims 17 to 25 **characterized by** the fact that it includes, inside the control data (R1), a utilization describer (D) for the data (M1 to Mn), to decipher the control data (R1) and transmit the describer (D) to the storage unit if the result of the comparison is positive, to process the data (M1 to Mn) by the storage unit according to the guidelines contained in the describer (D).

## Patentansprüche

1. Verfahren zur Kontrolle der Integrität und der Authentizität eines Datensatzes (M1 bis Mn), der in einer Gebührenfernseh-Decodiereinheit empfangen wurde, die aus einem Decoder (IRD) und einer Sicherheitseinheit (SC) sowie Mitteln der Kommunikation (NET, REC) mit einem Verwaltungszentrum besteht, mit den folgenden Schritten:
- Berechnung einer Kontrollinformation (Hx), die repräsentativ für das Ergebnis einer Funktion ist, die als einseitig gerichtet und kollisionsfrei bezeichnet wird und an allen oder einem Teil der Daten (M1 bis Mn) ausgeführt wird,
**dadurch gekennzeichnet, dass** es darin besteht,
- die Kontrollinformation (Hx) an die Sicherheitseinheit zu übermitteln und diese Kontrollinformation (Hx) mit einem ersten Schlüssel (k1) zu verschlüsseln,
- die verschlüsselte Kontrollinformation k1(Hx) an das Verwaltungszentrum zu schicken,
- die verschlüsselte Kontrollinformation k1(Hx) durch das Verwaltungszentrum zu entschlüsseln und mit einem Bezugswert der Kontrollinformation (Hy) zu vergleichen,
- Verwaltungsdaten (R) einschliesslich des Ergebnisses des Vergleichs in verschlüsselter Form an die Sicherheitseinheit (SC) zu übermitteln,
- das verschlüsselte Ergebnis des Vergleichs durch die Sicherheitseinheit (SC) zu entschlüsseln und die Decodiereinheit (IRD) über die Gültigkeit der Daten (M1 bis Mn) zu informieren.

2. Verfahren nach Anspruch 1, **dadurch gekennzeichnet, dass** das Verwaltungszentrum in den Verwaltungsdaten (R) den Bezugswert in verschlüsselter Form k2(Hy) an den Sicherheitsmodul (SC) zurückübermittelt.

3. Verfahren nach Ansprüchen 1 und 2, **dadurch gekennzeichnet, dass** die Berechnung durch den Decoder (IRD) ausgeführt und das Ergebnis an die Sicherheitseinheit (SC) übermittelt wird.

4. Verfahren nach Ansprüchen 1 bis 3, **dadurch gekennzeichnet, dass** die Berechnung durch die Sicherheitseinheit (SC) ausgeführt wird und die Daten (M1 bis Mn) vom Decoder (IRD) an die Sicherheitseinheit (SC) übermittelt werden.

5. Verfahren nach Ansprüchen 1 bis 4, **dadurch gekennzeichnet, dass** es darin besteht, den Verwaltungsdaten (R) einen Deskriptor (D) für die Nutzung der Daten (M1 bis Mn) beizufügen, die Verwaltungsdaten (R) zu entschlüsseln und den Deskriptor (D) an den Decoder zu übermitteln, wenn das Ergebnis des Vergleichs positiv ist, und die Daten (M1 bis Mn) durch den Decoder (IRD) in Übereinstimmung mit den Vorschriften zu verarbeiten, die im Deskriptor (D) enthalten sind.

6. Verfahren nach Ansprüchen 1 bis 5, **dadurch gekennzeichnet, dass** die Daten (M1 bis Mn) von einer Information (CRC, CS, H) bezüglich der Gültigkeit dieser Daten begleitet werden, und dadurch, dass der Sicherheitsmodul (SC) an den Decoder die Information übermittelt, diese Gültigkeitsinformation zu benutzen oder nicht zu benutzen, um die Daten (M1 bis Mn) zu kontrollieren.

7. Verfahren nach Anspruch 6, **dadurch gekennzeichnet, dass** diese Gültigkeitsinformation vom Typ CRC (zyklische Redundanzprüfung), CS (Prüfsumme) oder Hash (als eindirektional und kollisionsfrei bezeichnete Funktion) ist.

8. Verfahren nach Ansprüchen 1 bis 7, **dadurch gekennzeichnet, dass** es darin besteht, den Verwaltungsdaten (R) eine globale Kontrollinformation (H'y) beizufügen, die repräsentativ für das Ergebnis einer Funktion ist, die als einseitig gerichtet und kollisionsfrei bezeichnet wird und an allen oder einem Teil der Daten (M0 bis Mm) ausgeführt wird, wobei diese Daten den empfangenen Daten (M1 bis Mn) gleich sind oder diese einschliessen.

9. Verfahren nach Anspruch 8, **dadurch gekennzeichnet, dass** die Verwaltungsdaten (R) ein Zertifikat umfassen, das den Absender der Daten (M1 bis Mn) authentifiziert.

10. Verfahren nach Anspruch 8, **dadurch gekennzeichnet, dass** es darin besteht, periodisch oder auf Anforderung die Werte (H'x) zu berechnen, die repräsentativ für das Ergebnis einer Funktion sind, die als einseitig gerichtet und kollisionsfrei bezeichnet wird und an allen oder einem Teil der globalen Daten (M0 bis Mm) ausgeführt wird, wobei die Sicherheitseinheit (SC) dieses Ergebnis (H'x) mit dem Bezugswert (H'y) vergleicht.

11. Verfahren nach Anspruch 10, **dadurch gekennzeichnet, dass** die Berechnung durch den Decoder (IRD) ausgeführt und das Ergebnis der Berechnung (H'x) zur Sicherheitseinheit (SC) übermittelt wird.

12. Verfahren nach Anspruch 10, **dadurch gekennzeichnet, dass** die Berechnung durch die Sicherheitseinheit (SC) ausgeführt wird und die Daten (M0 bis Mm) vom Decoder (IRD) an die Sicherheitseinheit (SC) übermittelt werden.

13. Verfahren nach Ansprüchen 10 bis 12, **dadurch gekennzeichnet, dass** die periodische Berechnung auf Anforderung des Verwaltungszentrums, der Sicherheitseinheit, einer Prüfeinheit (TEST) oder eines der Kommunikationsmittel (NET, REC) ausgeführt wird.

14. Verfahren nach Ansprüchen 10 bis 13, **dadurch gekennzeichnet, dass** das Ergebnis des Vergleichs in einer für die Funktion des Systems üblichen Abonnementsnachricht übermittelt wird.

15. Verfahren nach Ansprüchen 10 bis 13, **dadurch gekennzeichnet, dass** der berechnete Wert (H'x) in für die Funktion des Systems üblichen Abonnementsnachrichten an das Verwaltungszentrum übermittelt wird, wobei jede Nachricht nur einen Teil des berechneten Wertes (H'x) enthält.

16. Verfahren nach einem der vorangehenden Ansprüche, **dadurch gekennzeichnet, dass** die Übermittlung zum Verwaltungszentrum verzögert erfolgt, und zwar nach einem innerhalb vorbestimmter Grenzen pseudo-zufallsbedingt definierten Zeitplan.

17. Verfahren zur Kontrolle der Integrität und der Authentizität eines Datensatzes (M1 bis Mn), der in einer Datenspeichereinheit gespeichert ist, die mit einer Sicherheitseinheit (SC) verbunden ist, mit den folgenden Schritten:
- durch die Speichereinheit an die Sicherheitseinheit (SC) Kontrolldaten (R1) zu übermitteln, die eine verschlüsselte Bezugsinformation k1 (Hy) enthalten, die repräsentativ für das Ergebnis einer Funktion ist, die als einseitig gerichtet und kollisionsfrei bezeichnet wird und im Voraus auf alle oder einen Teil der Daten (M1 bis Mn) angewendet wurde,
- eine Kontrollinformation (Hx) zu berechnen, die repräsentativ für das Ergebnis einer Funktion ist, die als einseitig gerichtet und kollisionsfrei bezeichnet wird und auf alle oder einen Teil der Daten (M1 bis Mn) angewendet wird,
- den berechneten Wert (Hx) mit dem durch die Sicherheitseinheit (SC) entschlüsselten Bezugswert (Hy) zu vergleichen und die Verwaltungsdaten (R2) einschliesslich des Vergleichsergebnisses an die Speichereinheit zu übermitteln.

18. Verfahren nach Anspruch 17, **dadurch gekennzeichnet, dass** die Berechnung durch die Speichereinheit ausgeführt und das Ergebnis der Berechnung (Hx) an die Sicherheitseinheit (SC) übermittelt wird.

19. Verfahren nach Anspruch 17, **dadurch gekennzeichnet, dass** die Berechnung durch die Sicherheitseinheit (SC) ausgeführt wird und die Daten (M1 bis Mn) von der Speichereinheit an die Sicherheitseinheit (SC) übermittelt werden.

20. Verfahren nach Ansprüchen 17 bis 19, **dadurch gekennzeichnet, dass** es darin besteht, den Kontrolldaten (R1) einen Deskriptor (D) für die Nutzung der Daten (M1 bis Mn) beizufügen und den Deskriptor (D) in entschlüsselter Form an die Speichereinheit zurückzusenden, wenn das Ergebnis des Vergleichs positiv ist, um die Daten (M1 bis Mn) durch die Speichereinheit in Übereinstimmung mit den Vorschriften zu verarbeiten, die im Deskriptor (D) enthalten sind.

21. Verfahren nach Anspruch 20, **dadurch gekennzeichnet, dass** die Kontrolldaten (R1) ein Zertifikat enthalten, das den Absender der Daten (M1 bis Mn) authentifiziert.

22. Verfahren nach einem der Ansprüche 17 bis 21, **dadurch gekennzeichnet, dass** es darin besteht, periodisch oder auf Anforderung die Werte (Hx) zu berechnen, die repräsentativ für das Ergebnis einer Funktion sind, die als einseitig gerichtet und kollisionsfrei bezeichnet wird und an allen oder einem Teil der Daten (M1 bis Mn) ausgeführt wird, wobei die Sicherheitseinheit (SC) dieses Ergebnis (Hx) mit einem Bezugswert (Hy) vergleicht.

23. Verfahren nach einem der Ansprüche 17 bis 22, **dadurch gekennzeichnet, dass** es darin besteht,
- die Daten (M1 bis Mn) in verschlüsselter Form zu speichern,
- an die Sicherheitseinheit (SC) in den Kontrolldaten (R1) einen Schlüssel (k3) für die Entschlüsselung der Daten (M1 bis Mn) zu übermitteln und,
- wenn das Ergebnis des Vergleichs Hx = Hy positiv ist, die Daten (M1 bis Mn) vermittels des Schlüssels (k3) zu entschlüsseln.

24. Verfahren nach Anspruch 23, **dadurch gekennzeichnet, dass** die Operation der Entschlüsselung der Daten (M1 bis Mn) durch die Speichereinheit ausgeführt wird, wobei der Entschlüsselungsschlüssel (k3) durch die Sicherheitseinheit (SC) übermittelt wird.

25. Verfahren nach Anspruch 23, **dadurch gekennzeichnet, dass** die Operation der Entschlüsselung der Daten (M1 bis Mn) durch die Sicherheitseinheit (SC) ausgeführt wird, wobei die Daten (M1 bis Mn) von der Speichereinheit an die Sicherheitseinheit (SC) übermittelt werden.

26. Verfahren nach Ansprüchen 17 bis 25, **dadurch gekennzeichnet, dass** es darin besteht, den Kontrolldaten (R1) einen Deskriptor (D) für die Nutzung der Daten (M1 bis Mn) beizufügen, die Verwaltungsdaten (R1) zu entschlüsseln und den Deskriptor (D) an die Speichereinheit zu übermitteln, wenn das Ergebnis des Vergleichs positiv ist, um die Daten (M1 bis Mn) durch die Speichereinheit in Übereinstimmung mit den im Deskriptor (D) enthaltenen Vorschriften zu verarbeiten.
